(19) Europäisches Patentamt
European Patent Office
Office européen des brevets

(11) **EP 4 223 474 A2**

(12) **EUROPÄISCHE PATENTANMELDUNG**

(43) Veröffentlichungstag:
**09.08.2023   Patentblatt 2023/32**

(21) Anmeldenummer: **23164532.6**

(22) Anmeldetag: **18.12.2018**

(51) Internationale Patentklassifikation (IPC):
**B29B 7/74** (2006.01)    **B29B 7/94** (2006.01)
**B29B 7/18** (2006.01)    **B29B 7/24** (2006.01)

(52) Gemeinsame Patentklassifikation (CPC):
**B29B 7/183; B29B 7/246; B29B 7/7466;
B29B 7/7485; B29B 7/7495; B29B 7/94**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(62) Dokumentnummer(n) der früheren Anmeldung(en)
nach Art. 76 EPÜ:
**18213275.3 / 3 670 126**

(71) Anmelder: **Continental Reifen Deutschland GmbH
30165 Hannover (DE)**

(72) Erfinder:
• **STEINER, Frank Stefan
30165 Hannover (DE)**

• **ALBERS, Antonia
30165 Hannover (DE)**

(74) Vertreter: **Continental Corporation
c/o Continental AG
Intellectual Property
Postfach 169
30001 Hannover (DE)**

Bemerkungen:
Diese Anmeldung ist am 28-03-2023 als
Teilanmeldung zu der unter INID-Code 62 erwähnten
Anmeldung eingereicht worden.

(54) **VERFAHREN ZUR HERSTELLUNG EINER KAUTSCHUKFERTIGMISCHUNG UND VORRICHTUNG ZUR DURCHFÜHRUNG DES VERFAHRENS SOWIE VERFAHREN ZUR HERSTELLUNG EINES VULKANISATS**

(57)     Die Erfindung betrifft ein Verfahren zur Herstellung einer Kautschukfertigmischung, wobei zur Herstellung der Kautschukfertigmischung eine Mischvorrichtung verwendet wird, welche aufweist: eine erste Mischkammer, wobei die erste Mischkammer von einem ersten Kammergehäuse, einer ersten Einfüllöffnung und einer ersten Auswurföffnung begrenzt wird, und eine unterhalb der ersten Mischkammer angeordnete zweite Mischkammer, wobei die zweite Mischkammer von einem zweiten Kammergehäuse, mindestens einer zweiten Einfüllöffnung und einer zweiten Auswurföffnung begrenzt wird.

Die Erfindung betrifft auch eine Vorrichtung zur Durchführung des Verfahrens und ein Verfahren zur Herstellung eines Vulkanisats.

EP 4 223 474 A2

**Beschreibung**

Die Erfindung betrifft ein Verfahren zur Herstellung einer Kautschukfertigmischung, wobei zur Herstellung der Kautschukfertigmischung eine Mischvorrichtung verwendet wird, welche aufweist: eine erste Mischkammer, wobei die erste Mischkammer von einem ersten Kammergehäuse, einer ersten Einfüllöffnung und einer ersten Auswurföffnung begrenzt wird, und eine unterhalb der ersten Mischkammer angeordnete zweite Mischkammer, wobei die zweite Mischkammer von einem zweiten Kammergehäuse, mindestens einer zweiten Einfüllöffnung und einer zweiten Auswurföffnung begrenzt wird.

Die Erfindung betrifft auch eine Vorrichtung zur Durchführung des Verfahrens und ein Verfahren zur Herstellung eines Vulkanisats.

In der Kautschukindustrie werden verschiedene Verfahren zur Herstellung von industriellen Gummiprodukten wie beispielsweise Fahrzeugreifen oder Transportbändern durchgeführt. Zur Herstellung dieser Gummiprodukte muss eine Kautschukmischung angemischt, anschließend in eine entsprechende Form gebracht und in einem finalen Schritt, der Vulkanisation, zu einem industriellen Gummiprodukt verarbeitet werden. Einer der wichtigeren Herstellungsschritte ist dabei das Mischen der Kautschukmischungsbestandteile zu einer Kautschukmischung. Bei dem Mischverfahren zur Herstellung einer solchen Kautschukmischung ist es wichtig, dass die einzelnen Kautschukmischungsbestandteile möglichst homogen und zugleich möglichst fein vermischt werden. Letzteres wird auch als Dispersion einzelner Kautschukmischungsbestandteile in der resultierenden Kautschukmischung bezeichnet und ist insbesondere beim Mischen von festen Kautschukmischungsbestandteilen mit flüssigen Bestandteilen problematisch. Gleiches gilt für eine homogene Vermischung. Kautschukmischungsbestandteile, welche nicht ausreichend homogen oder ausreichend fein vermischt werden, führen zu Kautschukmischungen oder Vulkanisaten mit schlechteren chemischen und physikalischen Eigenschaften. Die vorstehend beschriebenen Probleme treten insbesondere bei Kautschukmischungen umfassend Silika auf.

Die DE102017208137A1 betrifft eine schwefelvernetzte Kautschukmischung für Fahrzeugreifen enthaltend carbon nanotubes (CNT), einen Fahrzeugreifen, der die schwefelvernetzte Kautschukmischung aufweist, sowie ein Verfahren zur Herstellung der schwefelvernetzten Kautschukmischung enthaltend CNT.Die erfindungsgemäße schwefelvernetzte Kautschukmischung ist dadurch gekennzeichnet, dass die CNT in wenigstens einem Polyisopren vordispergiert sind. Der erfindungsgemäße Fahrzeugreifen weist die schwefelvernetzte Kautschukmischung bevorzugt im Laufstreifen und/oder einer Seitenwand und/oder einer Leitfähigkeitsbahn auf.

Die EP0277558A2 bezieht sich auf ein Verfahren zur Herstellung von Kautschukmischungen aufgeteilt in die zwei Stufen Grund- und Fertigmischen , wobei die Maximaltemperatur beim Fertigmischen niedriger als beim Grundmischen ist. Um die Gesamtmischzeit zu verkürzen und um die Mischvorrichtung zu vereinfachen, wird vorgeschlagen, dass das Mischgut nacheinander einen Grund- und einen Fertigmischer durchläuft, dass das Mischgut ohne Zwischenlagerung unter Ausnutzung der Schwerkraft vom Grundmischer zum Fertigmischer befördert wird, dass die Abkühlung des Mischgutes nach dem Grundmischen im Fertigmischer erfolgt und dass während des Abkühlens und Fertigmischens der einen Charge im Fertigmischer bereits das Grundmischen der nächsten Charge im Grundmischer erfolgt. Dabei werden zweckmäßigerweise Grund- und Fertigmischer in der Weise kombiniert, dass der Grundmischer ein Stempelkneter und der Fertigmischer ein stempelloser Kneter ist.

Die DE4124600A1 offenbart eine Vorrichtung zum Herstellen von Kautschukmischungen mit einem chargenweise arbeitenden Stempelkneter für die Grundmischung und einem darunter befindlichen stempellosen Kneter, in dem die Fertigmischung erstellt wird, wobei zwischen dem Stempelkneter und dem zur Erstellung der Fertigmischung dienenden Kneter ein Schacht zum Zuführen der Gummimischung zum stempellosen Kneter vorgesehen ist, dadurch gekennzeichnet, dass zumindest Teile der Schachtwände zur Bildung einer Abdeckung für die Einfüllöffnung des stempellosen Kneters nach unten klappbar sind in der Weise, dass die Abdeckung die Einfüllöffnung wenigstens teilweise verschließt.

Die EP3181634A1 betrifft ein Verfahren zur Herstellung einer Kautschukbestandteile, Öle, Füllstoffe in Form von Ruß und/oder Silica und Additive enthaltenden Kautschukmischung, deren Bestandteile in einer gemeinsamen Mischvorrichtung gemischt werden und die zur anschließenden Formgebung durch eine Düse geeignet ist. Es wird eine verbesserte gleichmäßige Verteilung der Füllstoffe in der Kautschukmischung dadurch erreicht, dass mit einem ersten Anteil der Kautschukbestandteile eine Viskosität zwischen 5 und 30 Mooney-Einheiten eingestellt wird und damit mit wenigstens den Füllstoffen eine Vormischung als erster Mischpartner hergestellt wird, dass ein zweiter Anteil der Kautschukbestandteile mit einer Viskosität zwischen 40 und 90 Mooney-Einheiten eingestellt, optional mit Ölen und/oder Additiven versetzt wird und einen zweiten Mischpartner bildet und dass die beiden Mischpartner in der Mischvorrichtung zu der Kautschukmischung vermischt werden.

Eine Aufgabe, die der Erfindung zugrunde liegt, besteht darin, ein Herstellungsverfahren für eine Kautschukfertigmischung bereitzustellen, sodass die Kautschukfertigmischung oder das aus der Kautschukfertigmischung resultierende Vulkanisat bessere Eigenschaften aufweist im Vergleich zu aus dem Stand der Technik bekannten Verfahren. Dies sollte insbesondere mit möglichst wenigen Herstellschritten erreicht werden.

Gelöst wird diese Aufgabe erfindungsgemäß durch ein Verfahren zur Herstellung einer Kautschukfertigmischung, wobei zur Herstellung der Kautschukfertigmischung eine Mischvorrichtung verwendet wird, welche aufweist:

- eine erste Mischkammer, wobei die erste Mischkammer von einem ersten Kammergehäuse, einer ersten Einfüllöffnung und einer ersten Auswurföffnung begrenzt wird, und
- eine unterhalb der ersten Mischkammer angeordnete zweite Mischkammer, wobei die zweite Mischkammer von einem zweiten Kammergehäuse, einer zweiten Einfüllöffnung und einer zweiten Auswurföffnung begrenzt wird,

wobei das Verfahren die folgenden Schritte umfasst:

A) Mischen von mindestens einem Kautschuk, mindestens einem Silanisierungsmittel und Silika in der ersten Mischkammer der Mischvorrichtung, sodass eine zumindest teilweise silanisierte Vorkautschukmischung entsteht,
B) Hinzufügen von mindestens einem Öl oder mindestens einem Flüssig-Polymer zur zumindest teilweise silanisierten Vorkautschukmischung und Mischen des mindestens einen Öls oder mindestens einen Flüssig-Polymers mit der zumindest teilweise silanisierten Vorkautschukmischung in der ersten Mischkammer, sodass eine Kautschukgrundmischung entsteht,
C) Mischen von einer oder mehrerer Vulkanisationschemikalien und mindestens einem weiteren Kautschuk in der zweiten Mischkammer der Mischvorrichtung, sodass eine Vorvulkanisationsmischung entsteht,
D) Hinzufügen der in Schritt B) hergestellten Kautschukgrundmischung zur in Schritt C) hergestellten Vorvulkanisationsmischung in die zweite Mischkammer und Mischen der Vorvulkanisationsmischung mit der Kautschukgrundmischung, sodass eine Kautschukfertigmischung entsteht.

Es ist eine bedeutende Leistung der vorliegenden Erfindung, erkannt zu haben, dass das Vermischen von Füllstoffen, Kautschuk und Silanen in Schritt A) eines erfindungsgemäßen Verfahrens, bevor die weiteren in Schritt B) und Schritt C) hinzugefügten Chemikalien beigefügt werden, eine homogenere Verteilung der Füllstoffe und der Silane und feinere Dispersion der Füllstoffe in der finalen Kautschukfertigmischung bewirkt. Dies führt dazu, dass auf eine kontrolliertere und präzisere Weise die finalen Eigenschaften des Kautschukprodukts besser und zuverlässiger vorhergesagt werden können als bei im Stand der Technik bekannten Verfahren.

Insbesondere vorteilhaft ist auch, dass die besagte Verteilung der Füllstoffe und der Silane in Schritt A) auch zu einer solchen Vermischung der restlichen hinzugefügten Chemikalien führt, dass in der unteren Mischkammer bereits die Kautschukfertigmischung hergestellt werden kann, ohne dass weitere Mischungsschritt notwendig sind. Dies bedeutet eine enorme Zeitersparnis des erfindungsgemäßen Verfahrens im Vergleich zu im Stand der Technik bekannten Verfahren.

Insbesondere bewirkt die Vermischung von ausschließlich Silanen und Silika im Kautschuk zudem, dass das Silika schneller silanisierten wird. Auch dies führt zu einer homogeneren Vermischung der Kautschukmischungsbestandteile in der finalen Kautschukfertigmischung.

Allgemein führt das vorstehend beschriebene erfindungsgemäße Verfahren zu vorteilhafteren Eigenschaften der resultierenden Kautschukfertigmischung und auch zu vorteilhafteren Eigenschaften des aus der Kautschukfertigmischung entstehenden Vulkanisats. Besonders bevorzugt wird das erfindungsgemäße Verfahren verwendet, um ein Reifenbauteil eines Fahzeugreifens oder eines Fahrzeugluftreifens herzustellen, ganz besonders bevorzugt um einen Laufstreifenabschnitt wie Cap, Base oder Schulter, eine Seitenwand oder einen Reifenwulstabschnitt herzustellen. Vorteilhafte Ausführungen solcher erfindungsgemäßen Verfahren zur Herstellung eines Vulkanisats sind nachstehend aufgeführt. Insbesondere die Vermeidung eines Vulkanisationsbeginns und der Prozesstemperatur in der zweiten Mischkammer hat eine bedeutende Wirkung auf die Qualität der resultierenden Kautschukfertigmischung.

Bevorzugt ist ein Verfahren wie vorstehend beschrieben oder wie vorstehend als bevorzugt beschrieben, wobei die zweite Mischkammer eine, zwei, drei, vier, fünf, sechs oder mehr als sechs zweite Einfüllöffnungen aufweist, erfindungsgemäß weist die Vorrichtung auch eine oder mehrere Zuführeinheiten zum Zuführen von einer oder mehreren Vulkanisationschemikalien und mindestens einem weiteren Kautschuk auf, wobei die Zuführeinheit Mittel zur Temperierung der einen oder der mehreren Vulkanisationschemikalien und des mindestens einen weiteren Kautschuks aufweist.

Die ist vorteilhaft, da die eine oder mehreren Vulkanisationschemikalien und/oder der mindestens einen weiteren Kautschuk durch eine weitere zweite Einfüllöffnung der zweiten Mischkammer eingefüllt wird und somit die zweite Mischkammer häufig eine niedrigere Temperatur hat als die erste Mischkammer und/oder ein nachstehend beschriebener Zwischenschacht. Diese niedrigeren Temperaturen verbessern die Kontrolle zur Vermeidung einer vorzeitigen Vernetzungsreaktion der Vulkanisationschemikalien, wie dies beispielsweise bei höheren Temperaturen, z.B. in der ersten Mischkammer und/oder des nachstehend beschriebenen Zwischenschachtes, erfolgen könnte.

Im Rahmen der vorliegenden Erfindung umfasst der Ausdruck "Flüssig-Polymere" bevorzugt auch Harze, welche bei 20°C und Normaldruck flüssig sind oder einen Erweichungspunkt nach der Vicat Methode aus ASTM-D1525 von unter 100 °C aufweisen. Harze, welche bei 20°C und Normaldruck im festen Aggregatszustand vorliegen oder einen Erweichungspunkt nach der Vicat Methode aus ASTM-D1525 von 100 °C oder höher aufweisen, werden in einem erfindungsgemäßen Verfahren bevorzugt nur in Schritt A) hinzugefügt, um eine Maximierung der Scherkräfte im Schritt A) zu bewirken.

Im Rahmen der vorliegenden Erfindung beginnt der Schritt A), falls nicht anders angegeben, zeitlich bevorzugt dann, sobald sich ein Kautschuk wie beschrieben, ein Silanisierungsmittel wie beschrieben und ein Silika wie beschrieben in der ersten Mischkammer befinden, und endet bevorzugt dann, sobald zumindest ein Teil des besagten Silikas silanisiert wurde. Bevorzugt ist es, wenn der Schritt A) zumindest für einen Zeitraum im Bereich von 1 min bis 10 min durchgeführt wird.

Im Rahmen der vorliegenden Erfindung beginnt der Schritt B), falls nicht anders angegeben, zeitlich bevorzugt dann, sobald ein Öl oder ein Flüssig-Polymer wie beschrieben sich in der ersten Mischkammer befinden, und endet bevorzugt dann, wenn die Kautschukgrundmischung die erste Mischkammer verlässt. Bevorzugt ist es, wenn der Schritt B) zumindest für einen Zeitraum im Bereich von 1 min bis 10 min durchgeführt wird.

Im Rahmen der vorliegenden Erfindung beginnt der Schritt C), falls nicht anders angegeben, zeitlich bevorzugt dann, sobald ein weiterer Kautschuk oder eine oder mehrere Vulkanisationschemikalien wie beschrieben sich in der zweiten Mischkammer befinden, und endet bevorzugt dann, wenn die Kautschukgrundmischung in die zweite Mischkammer hinzugefügt wird. Bevorzugt ist es, wenn der Schritt C) zumindest für einen Zeitraum im Bereich von 1 min bis 10 min durchgeführt wird.

Im Rahmen der vorliegenden Erfindung beginnt der Schritt D), falls nicht anders angegeben, zeitlich bevorzugt dann, sobald die Kautschukgrundmischung in die zweite Mischkammer hinzugefügt wird, und endet bevorzugt dann, wenn die Kautschukfertigmischung die zweite Mischkammer verlässt. Bevorzugt ist es, wenn der Schritt D) zumindest für einen Zeitraum im Bereich von 1 min bis 10 min durchgeführt wird.

Bevorzugt ist ein Verfahren wie vorstehend beschrieben oder wie vorstehend als bevorzugt beschrieben, wobei in Schritt C) anstelle des weiteren Kautschuks eine bereits gemischte Kautschukmischung hinzugefügt wird. Eine solche bereits gemischte Kautschukmischung kann eine vorstehend oder nachstehend beschriebene Kautschukmischung sein. Bevorzugt umfasst eine solche bereits gemischte Kautschukmischung mindestens eine, mehrere oder sämtliche der folgenden Verbindungen:

- Kautschuk, bevorzugt natürliches Polyisopren (NR) und Styrol-Butadien-Kautschuk (SBR) und Polybutadien (BR),
- Ruß, bevorzugt in der Menge 5 bis 80 phr,
- Silika, bevorzugt in der Menge 50 bis 150 phr.

Besonders bevorzugt weist eine vorstehend beschriebene bereits gemischte Kautschukmischung die gleichen Kautschukmischungsbestandteile wie eine in erfindungsgemäß hergestellte Kautschukgrundmischung auf. Dies könnte beispielsweise dadurch geschehen, dass ein Teil der in der ersten Mischkammer angemischten Kautschukgrundmischung bereits in die zweite Mischkammer zum vor- und nachstehend beschriebenen Vorvermischen mit den Vulkanisationschemikalien hinzugefügt wird. Die Zugabe eines weiteren Kautschuks oder einer bereits gemischten Kautschukmischung in Schritt C) ermöglicht eine bessere Temperaturkontrolle der Mischung in der zweiten Mischkammer und somit eine geringere Wahrscheinlichkeit von Pre-Scorch.

Ein lang ersehntes Bedürfnis ist es jedoch, dass in Schritt C) kein Kautschuk oder keine Kautschukmischung hinzugefügt wird, um die Prozessmischungskomplexität zu reduzierten.

Bevorzugt ist ein Verfahren wie vorstehend beschrieben oder wie vorstehend als bevorzugt beschrieben, wobei das Hinzufügen der in Schritt B) hergestellten Kautschukgrundmischung zur in Schritt C) hergestellten Vorvulkanisationsmischung in Schritt D) ohne Zwischenlagerung geschieht, d.h. die Kautschukgrundmischung direkt von der ersten Mischkammer in die zweite Mischkammer fällt.

Die Erfindung betrifft ein Verfahren wie vorstehend beschrieben oder wie vorstehend als bevorzugt beschrieben, wobei die erste Mischkammer einen zum Öffnen und Schließen der ersten Auswurföffnung verstellbar ausgebildeten Sattel aufweist.

Ein Vorteil des vorstehend beschriebenen Aspekts der vorliegenden Erfindung ist, dass dies eine noch homogenere Vermischung der Füllstoffe und der Silane in der Kautschukmischung in Schritt A) bewirkt und somit den Vermischungsgrad der finalen Kautschukfertigmischung weiter erhöht.

Bevorzugt ist ein Verfahren wie vorstehend beschrieben oder wie vorstehend als bevorzugt beschrieben, wobei ein oder jeder Kautschuk des in Schritt A) gemischten mindestens einen Kautschuks ausgesucht ist aus der Gruppe bestehend aus synthetischem Polyisopren (IR) und natürlichem Polyisopren (NR) und Styrol-Butadien-Kautschuk (SBR) und Polybutadien (BR), wobei der mindestens eine Kautschuk in Schritt A) bevorzugt die drei Kautschuke natürliches Polyisopren (NR) und Styrol-Butadien-Kautschuk (SBR) und Polybutadien (BR) umfasst.

Ein Vorteil des vorstehend beschriebenen Aspekts der vorliegenden Erfindung ist, dass insbesondere mit den vorstehend beschriebenen Kautschukarten eine besonders hohe Vermischung erzielt werden kann.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Kautschukfertigmischung vorhandenen Kautschuke bezogen, bevorzugt auf Kautschuke mit einem Gewichtsmittel Mw des Molekulargewichts gemäß GPC von 250.000 bis 5.000.000 g/mol.

Die Bestimmung des Gewichtsmittels Mw und des Zahlenmittels Mn des Molekulargewichtes der Polymere erfolgt mittels Gelpermeationschromatographie (GPC mit Tetrahydrofuran (THF) als Elutionsmittel bei 40 °C, Apparat PPS, kalibriert mit Polystyrol- Standard; Größenausschlußchromatographie; engl. SEC = size exclusion chromatography in Anlehnung an BS ISO 11344:2004).

Im Rahmen der vorliegenden Erfindung wird die Abkürzung Mw für das Gewichtsmittel des Molekulargewichts verwendet.

Das Silika liegt in Schritt A) bevorzugt in einer Menge von 30 phr bis 250 phr vor, bevorzugt von 50 phr bis 150 phr.

Bevorzugt ist ein Verfahren wie vorstehend beschrieben oder wie vorstehend als bevorzugt beschrieben, wobei zusätzlich mindestens ein Harz in Schritt A) hinzugemischt wird, wobei das Harz ein Kohlenwasserstoffharz ist, welches bevorzugt einen Erweichungspunkt gemäß ASTM E 28 (Ring und Ball) von 60 bis 200 °C aufweist, bevorzugt 60 bis 150 °C, besonders bevorzugt 60 bis 120 °C, ganz besonders bevorzugt 60 bis 99 °C, und wiederum ganz besonders bevorzugt 80 bis 99 °C. Insbesondere mit einem Inden-Cumaron-Harz mit einem Erweichungspunkt gemäß ASTM E 28 (Ring und Ball) von 60 bis 150 °C, bevorzugt 80 bis 95 °C, ergibt sich insbesondere in Kombination mit den oben genannten Bestandteilen eine besonders gute Prozessierbarkeit der Kautschukmischung, insbesondere hinsichtlich der Extrudate vor der Vernetzung, bei gleichzeitig guten Abriebeigenschaften.

Ein Vorteil des vorstehend beschriebenen Aspekts der vorliegenden Erfindung ist, dass Vermischungsprobleme insbesondere bei harzhaltigen Kautschukmischungen auftreten und somit in einem erfindungsgemäßen Verfahren überwunden werden können. Besonders wichtig dabei ist, dass die Harze in Schritt A) eines erfindungsmäßen Verfahrens hinzugefügt werden, da nur dann der gewünschte Vermischungsgrad der finalen Kautschukfertigmischung eintritt und kein weitere Mischungsschritt nach der unteren Mischkammer notwendig ist, um die finale Kautschuk Fertigmischung herzustellen.

Bevorzugt ist ein Verfahren wie vorstehend beschrieben oder wie vorstehend als bevorzugt beschrieben, wobei ein oder jedes Silanisierungsmittel des in Schritt A) hinzugefügten mindestens einen Silanisierungsmittels ein Organosilan ist, bevorzugt ein bifunktionelles Organosilan, wobei bevorzugt ein oder jedes Silanisierungsmittel des in Schritt A) hinzugefügten mindestens einen Silanisierungsmittels ausgesucht ist aus der Gruppe bestehend aus 3-Mercaptopropyltriethoxysilan, 3,3'-Bis(triethoxysilylpropyl)polysulfide mit 2 bis 8 Schwefelatomen und 3-mercaptopropyl-di(tridecan-1-oxy-13-penta (ethyleneoxide))-ethoxysilane.

Bevorzugt ist ein Verfahren wie vorstehend beschrieben oder wie vorstehend als bevorzugt beschrieben, wobei die Gesamtmenge an Silanisierungsmitteln im Bereich von 2 bis 20 phr liegt, bevorzugt im Bereich von 5 bis 15 phr.

Ein Vorteil des vorstehend beschriebenen Aspekts der vorliegenden Erfindung ist, dass der Vermischungsgrad einer Kautschukmischung mit den vorstehend beschriebenen Silanen mittels eines erfindungsgemäßen Verfahrens besonders gut verbessert werden kann im Vergleich zu im Stand der Technik bekannten Verfahren.

Bei Kautschukgrundmischungen mit Füllstoffen wie Silika ist zudem zu beachten, dass zur Verbesserung der Verarbeitbarkeit und zur Anbindung der Füllstoffe, wie z.B. Silika, an Kautschuke so genannte Silanisierungsmittel als reaktive Zusatzstoffe nötig sind, die mit den polaren Gruppen des Füllstoffs reagieren und im weiteren Verlauf die Anbindung an den Kautschuk ermöglichen. Solche aus dem Stand der Technik bekannten Silanisierungsmittel sind vorteilhafterweise z. B. bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers, insbesondere eines Kautschuks, eingehen kann. Bei der Reaktion des Füllstoffs, insbesondere Silika, mit dem Silanisierungsmittel sind Temperatur und Mischzeit exakt einzuhalten, um eine gewünschte Umsetzung, zu erreichen und gleichzeitig eine Zersetzung des oder der Silanisierungsmittel zu vermeiden. Die Zugabe der Füllstoffe und des Silanisierungsmittels erfolgt üblicherweise bei der Herstellung der Kautschukgrundmischung, da die Temperaturen bei der Herstellung der Fertigmischung mit ca. 120 °C nicht hoch genug für die Reaktion zwischen Silanisierungsmittel und Füllstoff sind.

Ein bifunktionelles Organosilan kann als zweite funktionelle Gruppe z. B. eine der folgenden chemischen Gruppen umfassen:

-SCN, -SH, -NH2 oder -Sx- (mit x = 2 bis 8).
So können z. B. 3-Mercaptopropyltriethoxysilan,
3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das
entsprechende Disulfid (TESPD) oder auch Gemische aus den Sulfiden mit 1 bis 8 Schwefelatomen mit unterschiedlichen Gehalten an den verschiedenen Sulfiden, verwendet
werden. TESPT kann dabei beispielsweise auch als Gemisch mit Industrieruß zugesetzt werden. Dieses Gemisch ist unter dem Handelsname X50S® der Firma Evonik bekannt.

Die Erfindung betrifft weiterhin ein Verfahren wie vorstehend beschrieben oder wie vorstehend als bevorzugt beschrieben, wobei zusätzlich zum Silanisierungsmittel in Schritt A)

- ein Silanisierungsbeschleuniger wie 1,3-diphenylguanidine (DPG) und/oder Stearinsäure, bevorzugt in einer Gesamtmenge von DPG und/oder Stearinsäure von 0,1 bis 2 phr, besonders bevorzugt 0,5 bis 1 phr, und/oder

- Ruß, bevorzugt in einer Menge von 0 bis 20 phr, besonders bevorzugt in einer Menge von 1 bis 10 phr,

hinzugefügt und vermischt wird.

Ein Vorteil des vorstehend beschriebenen Aspekts der vorliegenden Erfindung ist, dass durch die Zugabe von Ruß in Schritt A) die Scherkräfte erhöht werden und somit eine homogenere Vermischung und feiner Dispersion erreicht wird. Der Vorteil des

Silanisierungsbeschleuniger ist, dass die Silanisierung nicht nur schneller und energiesparender abläuft, sondern auch die Polymerketten in einem erfindungsgemäßen Verfahren noch weniger abgebaut, d.h. verkürzt, werden im Vergleich zu im Stand der Technik bekannten Verfahren.

Bevorzugt ist ein Verfahren wie vorstehend beschrieben oder wie vorstehend als bevorzugt beschrieben, wobei ein oder jedes Öl des in Schritt B) hinzugefügten mindestens einen Öls ausgesucht ist aus der Gruppe bestehend aus Mineralöl und Rapsöl.

Ein Vorteil des vorstehend beschriebenen Aspekts der vorliegenden Erfindung ist, dass Öle, insbesondere Mineralöle und Rapsöle, ein Vermischen in besonderer Weise erschweren und somit mit einem erfindungsgemäßen Verfahren ein höherer Vermischungsgrad der Kautschukfertigmischung erzielt werden kann als bei im Stand der Technik bekannten Verfahren.

Gemäß einer bevorzugten Ausführungsform wird in Schritt B) mindestens ein Öl oder mindestens ein Flüssig-Polymer hinzugefügt, wobei die Gesamtmenge an Öl und/oder Flüssig-Polymer im Bereich von 10 bis 150 phr, bevorzugt im Bereich von 20 bis 150 phr, besonders bevorzugt im Bereich von 30 bis 100 phr, wiederum bevorzugt im Bereich von 45 bis 80 phr, liegt. Hierdurch ergibt sich insbesondere in Kombination mit den oben genannten Bestandteilen eine besonders gute Prozessierbarkeit der Kautschukmischung, insbesondere der Extrudate vor der Vernetzung, bei gleichzeitig guten Eigenschaften im Hinblick auf die zu lösende Aufgabe.

Im Rahmen der vorliegenden Erfindung umfasst eine das mindestens eine Öl zumindest ein Mineralöl ausgewählt aus der Gruppe bestehend aus aromatische, naphthenische und paraffinische Mineralölen. Besonders bevorzugte Mineralöle sind dabei ausgewählt aus der Gruppe bestehend aus MES (Mild Extraction Solvate), RAE (Residual Aromatic Extract), TDAE (Treated Distillate Aromatic Extract), Rubber-to-Liquid-Öle (RTL), Biomass-to-Liquid-Öle (BTL) und Rapsöl. Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphthenische Öle.

Gemäß einer bevorzugten Ausführungsform der Erfindung enthält die Kautschukgrundmischung wenigstens ein Mineralöl, bevorzugt wenigstens TDAE und/oder RAE. Hiermit ergeben sich besonders gute Prozessierbarkeiten, insbesondere eine gute Mischbarkeit der Kautschukmischung.

Im Rahmen der vorliegenden Erfindung ist ein Flüssig-Polymer als Mischung bei 20 °C flüssig und hat ein mittleres Molekulargewicht (Bestimmung per GPC = gel permeation chromatography, in Anlehnung an BS ISO 11344:2004) zwischen 500 und 20000 g/mol.

Bevorzugt ist ein Verfahren wie vorstehend beschrieben oder wie vorstehend als bevorzugt beschrieben, wobei das Verfahren zusätzlich den Schritt B-C) umfasst und der Schritt B-C) wie folgt lautet:
Hinzufügen von mindestens einer Verarbeitungschemikalie zu der ersten Mischkammer und Mischen der mindestens einen Verarbeitungschemikalie mit der Vorkautschukmischung mit dem mindestens einen Öl oder dem mindestens einen Flüssig-Polymer.

Ein Vorteil des vorstehend beschriebenen Aspekts der vorliegenden Erfindung ist, dass die chemischen und physikalischen Eigenschaften der resultierenden Kautschukmischung oder des resultierenden Vulkanisats weiter verbessert werden können. Für den Fall, dass ein Schritt B-C) vorhanden ist, liegt die Kautschukgrundmischung erst am Ende des Schrittes B-C) vor.

Bevorzugt ist ein Verfahren wie vorstehend beschrieben oder wie vorstehend als bevorzugt beschrieben, wobei in Schritt A) keine Verarbeitungschemikalien hinzugefügt werden.

Im Rahmen der vorigen Erfindung sind Verarbeitungschemikalien Verbindungen ausgesucht aus der Gruppe bestehend aus: Zinkoxid, Stearinsäure und Wachse.

Bevorzugt während werden während des Schrittes B-C) noch Prozesshilfsmittel, wie beispielsweise Mastikationshilfsmittel, wie z. B.

2,2'-Dibenzamidodiphenyldisulfid (DBD) oder Zinkseifen, und Alterungsschutzmittel, wie beispielsweise N-Phenyl-N'-(1,3-dimethylbutyl)-p-phenylendiamin (6PPD), N-Isopropyl-N'-phenyl-p-phenylendiamin (IPPD), 2,2,4-Trimenthyl-1,2-dihydrochinolin (TMQ), hinzugefügt.

Bevorzugt ist ein Verfahren wie vorstehend beschrieben oder wie vorstehend als bevorzugt beschrieben, wobei das Verfahren zusätzlich den Schritt B-C) umfasst und der Schritt B-C) wie folgt lautet: Hinzufügen von mindestens einem Ruß zur ersten Mischkammer und Vermischung zur Kautschukgrundmischung, wobei der mindestens eine Ruß in dem Mengen 1 bis 80 phr Ruß hinzugefügt wird, bevorzugt in den Mengen 1 bis 40 phr Ruß, besonders bevorzugt in den Mengen 2 bis 10 phr Ruß.

Ein Vorteil des vorstehend beschriebenen Aspekts der vorliegenden Erfindung ist, dass die Zugabe von Ruß das Einmischen der vorher genannten Chemikalien erleichtert.

Bevorzugt liegt zumindest teilweise während des Schrittes B-C) eine Temperatur in der ersten Mischkammer im Bereich von 120 °C bis 190 °C vor, bevorzugt im Bereich von 150 °C bis 190 °C, besonders bevorzugt eine Temperatur in der ersten Mischkammer im Bereich von 160 °C bis 180 °C, ganz besonders bevorzugt eine Temperatur in der ersten Mischkammer im Bereich von 160 °C bis 170 °C oder im Bereich von 170 °C bis 180 °C.

Ein Vorteil des vorstehend beschriebenen Aspekts der vorliegenden Erfindung ist, dass die chemischen und physikalischen Eigenschaften der resultierenden Kautschukmischung oder des resultierenden Vulkanisats bei höheren Temperaturen im Schritt B-C) weiter verbessert werden können. Insbesondere kann die Mooney-Viskosität der resultierenden Kautschukfertigmischung erhöht werden, was besonders die anschließende Extrusion der Kautschukfertigmischung extrem vereinfacht, da hier somit die Präzision des Extrudats beim Ausformen erhöht werden kann sowie die Formstabilität während der Lagerzeit des Extrudats erhöht wird.

Im Rahmen der vorliegenden Erfindung beginnt der Schritt B-C), falls nicht anders angegeben, zeitlich bevorzugt dann, sobald mindestens eine Verarbeitungschemikalie in die erste Mischkammer hinzugefügt wird, und endet bevorzugt dann, wenn die Kautschukgrundmischung, welche zumindest Kautschuk, zumindest teilweise silianisiertes Silika und mindestens eine Verarbeitungschemikalie sowie Öl oder Flüssig-Polymer umfasst, die erste Mischkammer verlässt. Bevorzugt ist es, wenn der Schritt B-C) zumindest für einen Zeitraum im Bereich von 1 min bis 10 min durchgeführt wird.

Bevorzugt ist ein Verfahren wie vorstehend beschrieben oder wie vorstehend als bevorzugt beschrieben, wobei der Schritt B) mit dem Hinzufügen des Öls oder des mindestens einen Flüssig-Polymers beginnt und mit dem Hinzufügen der Kautschukgrundmischung zur zweiten Mischkammer endet, wobei zumindest teilweise während Schritt B) eine Temperatur in der ersten Mischkammer im Bereich von 150 °C bis 190 °C vorliegt, bevorzugt eine Temperatur in der ersten Mischkammer im Bereich von 160 °C bis 180 °C, besonders bevorzugt eine Temperatur in der ersten Mischkammer im Bereich von 160 °C bis 170 °C oder im Bereich von 170 °C bis 180 °C.

Ein Vorteil des vorstehend beschriebenen Aspekts der vorliegenden Erfindung ist, dass bei den vorstehend beschriebenen Temperaturen eine Kautschukfertigmischung resultiert, welche im Vergleich zu anderen erfindungsgemäßen Verfahren eine höhere Mooney-Viskosität aufweist. Dies führt dazu, dass die Lagerung oder nachgeschalteten Prozessschritte, wie beispielsweise die Extrusion, vereinfacht wird. Ein weiterer Vorteil des vorstehend beschriebenen Aspekts der vorliegenden Erfindung ist, dass die chemischen und physikalischen Eigenschaften der resultierenden Kautschukmischung oder des resultierenden Vulkanisats bei höheren Temperaturen im Schritt B) weiter verbessert werden können.

Bevorzugt ist ein Verfahren wie vorstehend beschrieben oder wie vorstehend als bevorzugt beschrieben, wobei der Schritt D) mit dem Hinzufügen der Kautschukgrundmischung zur zweiten Mischkammer beginnt und mit dem Auswerfen der Kautschukfertigmischung aus der zweiten Mischkammer endet, wobei zumindest teilweise während Schritt D) eine Temperatur in der zweiten Mischkammer im Bereich von 80 °C bis 140 °C vorliegt, bevorzugt eine Temperatur in der zweiten Mischkammer im Bereich von 90 °C bis 130 °C, besonders bevorzugt eine Temperatur in der zweiten Mischkammer im Bereich von 100 °C bis 125 °C.

Ein Vorteil des vorstehend beschriebenen Aspekts der vorliegenden Erfindung ist, dass bei diesen Temperaturen ein schnelles Vermischen sichergestellt werden kann, ohne dass ein so genannter "Scorch" auftritt.

Bevorzugt ist ein Verfahren wie vorstehend beschrieben oder wie vorstehend als bevorzugt beschrieben, wobei der Füllfaktor $F_{Füll}$ in Schritt A) und/oder Schritt B) im Bereich von 78 % bis 95 % liegt, bevorzugt im Bereich von Bereich von 80 % bis 90 %, wobei der besagte Füllfaktor $F_{Füll}$ besonders bevorzugt in der ersten Mischkammer vorliegt oder ausschließlich in der ersten Mischkammer vorliegt.

Ein Vorteil des vorstehend beschriebenen Aspekts der vorliegenden Erfindung ist, dass einerseits auf diese Weise größere Mengen einer Kautschukmischung in einem Mischschritt hergestellt werden können und andererseits eine bessere Vermischung der Kautschukmischungsbestandteile erreicht, insbesondere eine bessere Dispersion des Füllstoffs, d.h. dass die Partikeldurchmesser der Sekundärpartikel der Füllstoffe verkleinert werden. Insbesondere bei Kautschukmischungen umfassend Silika mit den vorstehend beschriebenen Weichmacheranteilen oder den nachstehend beschriebenen Viskositäten wird eine bessere Dispersion oder Vermischung erreicht, wenn der Füllfaktor wie vorstehend beschrieben angepasst wird. Ohne an eine wissenschaftliche Theorie gebunden sein zu wollen, wird davon ausgegangen, dass der höhere Füllfaktor höhere Scherkräfte im Mischer bewirkt und somit zu der verbesserten Dispersion und Vermischung führt.

Im Rahmen der vorliegenden Erfindung ist der Füllfaktor $F_{Füll}$ wie folgt definiert: $F_{Füll} = V_{VK} / V_{net}$

$V_{VK}$ = Volumen der in Schritt A) hergestellten zumindest teilweise silanisierten Vorkautschukmischung und

$V_{net}$ = Volumen der ersten Mischkammer abzüglich des Volumens des Rotors in der Mischkammer, bevorzugt der ersten Mischkammer.

Im Rahmen der vorliegenden Erfindung kann der durchschnittliche Partikeldurchmesser der Sekundärpartikel der Füllstoffe, d.h. der Partikeldurchmesser der Agglomerate oder deren Korngröße, auf verschiedene Weisen ermittelt werden, wobei die drei folgenden Methoden A), B) und C) in der angegebenen Reihenfolge bevorzugt sind:

A) Bevorzugt wird der "durchschnittliche Partikeldurchmesser " durch den Filtertest nach DIN EN 13900-5 oder ISO 23900-5 bestimmt;

B) Besonders bevorzugt wird der "durchschnittliche Korngröße " durch Oberflächenreflexion an frischen Schnittkanten von Gummiproben (DisperGRADER™) nach ISO 11345 (Methoden C, D und E) oder ASTM D7723 bestimmt;

C) Ganz besonders bevorzugt wird der "durchschnittliche Partikeldurchmesser" durch einen arithmetischen Mittelwert von Messwerten ermittelt, die durch Messen des flächengleichen Kreisdurchmessers (Heywood-Durchmesser) von zufällig ausgewählten 10 oder mehr Partikeln mit Hilfe eines Rastertransmissions-Elektronenmikroskops (STEM), einer energiedispersiven Röntgenanalyse (EDX), etc. erhalten werden.

Durch die Messung der vorstehend beschriebenen Partikelgröße kann insbesondere die vor- oder nachstehende Dispersion der Füllstoffe bewertet werden.

Bevorzugt ist ein Verfahren wie vorstehend beschrieben oder wie vorstehend als bevorzugt beschrieben, wobei die Kautschukfertigmischung eine Mooney-Viskosität (ML 1+3) bei 100 °C von größer als 20 MU aufweist, bevorzugt eine Mooney-Viskosität im Bereich von 20 bis 60 MU, besonders bevorzugt eine Mooney-Viskosität im Bereich von 25 bis 40 bis MU.

Ein Vorteil des vorstehend beschriebenen Aspekts der vorliegenden Erfindung ist, dass ein erfindungsgemäßes Verfahren Kautschukfertigmischung mit erhöhten Mooney-Viskositäten hervorbringt, welche vorteilhafterweise besser im Anschluss ans Mischen prozessiert werden können.

Bevorzugt ist ein Verfahren wie vorstehend beschrieben oder wie vorstehend als bevorzugt beschrieben, wobei der Schritt C) zumindest teilweise gleichzeitig mit den Schritten A) und/oder B) durchgeführt wird.

Ein Vorteil des vorstehend beschriebenen Aspekts der vorliegenden Erfindung ist, dass ein erfindungsgemäßes Verfahren schneller durchgeführt werden kann, da mehrere Schritte gleichzeitig durchgeführt werden.

Bevorzugt ist ein Verfahren wie vorstehend beschrieben oder wie vorstehend als bevorzugt beschrieben, wobei die in Schritt E) hergestellte

Kautschukfertigmischung auf eine Temperatur im Bereich von 20 °C bis 60 °C abgekühlt wird und/oder die abgekühlte Fertigmischung in einem Extruder extrudiert wird, wobei die Abkühlung auf 20 °C bis 60 °C bevorzugt in einer Batch-Off-Anlage oder beim Umlenken um eine oder mehrere Umlenkrollen durchgeführt wird.

Der vorstehend beschrieben Aspekt der vorliegenden Erfindung beschreibt, dass kein weiterer Mischschritt notwendig ist, um die in einem erfindungsgemäßen Verfahren hergestellte Kautschukmischung in eine so genannte "Batch-Off"-Anlage oder direkt in den Extruder weiterzuleiten. Dies ist ein wesentlicher Vorteil der Erfindung, da bei nicht-erfindungsgemäßen Verfahren die fertiggemischte Kautschukmischung mehrmals durch die "Batch-Off"-Anlage geführt werden muss und somit zusätzliche Ressourcen beansprucht.

In besonders hohem Maße bevorzugt ist ein Verfahren wie vorstehend beschrieben, wobei

wobei zur Herstellung der Kautschukfertigmischung eine Mischvorrichtung verwendet wird, welche aufweist:

- eine erste, zwei Rotoren umfassende Mischkammer, wobei die erste Mischkammer von einem ersten Kammergehäuse, einer ersten Einfüllöffnung und einer ersten Auswurföffnung begrenzt wird, und
- eine unterhalb der ersten Mischkammer angeordnete zweite Mischkammer, wobei die zweite, ebenfalls zwei Rotoren umfassende Mischkammer von einem zweiten Kammergehäuse, einer zweiten Einfüllöffnung und einer zweiten Auswurföffnung begrenzt wird,

wobei das Verfahren die folgenden Schritte umfasst:

A) Mischen von mindestens einem Kautschuk, mindestens einem Silanisierungsmittel und Silika in der ersten Mischkammer der Mischvorrichtung, sodass eine zumindest teilweise silanisierte Vorkautschukmischung entsteht,

B) Hinzufügen von mindestens einen Öl oder mindestens einen Flüssig-Polymer zur zumindest teilweise silanisierten Vorkautschukmischung und Mischen des mindestens einem Öls oder mindestens einem Flüssig-Polymers mit der zumindest teilweise silanisierten Vorkautschukmischung in der ersten Mischkammer, sodass eine Kautschukgrundmischung entsteht,

C) Mischen von einer oder mehrerer Vulkanisationschemikalien und mindestens einem weiteren Kautschuk in der zweiten Mischkammer der Mischvorrichtung, sodass eine Vorvulkanisationsmischung entsteht,

D) Hinzufügen der in Schritt B) hergestellten Kautschukgrundmischung zur in Schritt C) hergestellten Vorvulkanisationsmischung in die zweite Mischkammer und Mischen der Vorvulkanisationsmischung mit der Kautschukgrundmischung, sodass eine Kautschukfertigmischung entsteht,

wobei

- die erste Mischkammer einen zum Öffnen und Schließen der ersten Auswurföffnung verstellbar ausgebildeten Sattel aufweist,
- der mindestens eine Kautschuk in Schritt A) die drei Kautschuke natürliches Polyisopren (NR) und Styrol-Butadien-Kautschuk (SBR) und Polybutadien (BR) umfasst,
- zusätzlich mindestens ein Harz in Schritt A) dazugemischt wird,
- ein oder jedes Silanisierungsmittel des in Schritt A) hinzugefügten mindestens einen Silanisierungsmittels ein Organosilan in der Menge von 2 bis 20 phr ist
- zusätzlich zum Silanisierungsmittel in Schritt A)

    - 1,3-diphenylguanidine (DPG) und Stearinsäure in einer Gesamtmenge von 0,1 bis 2 phr, und
    - Ruß, bevorzugt in einer Menge von 0 bis 20 phr, besonders bevorzugt in einer Menge von 1 bis 10 phr,

    hinzugefügt und vermischt wird,
- ein oder jedes Öl des in Schritt B) hinzugefügten mindestens einen Öls ausgesucht ist aus der Gruppe bestehend aus Mineralöl und Rapsöl.
- das Verfahren zusätzlich den Schritt B-C) umfasst und der Schritt B-C) wie folgt lautet:

    - Hinzufügen von mindestens einer Verarbeitungschemikalie zu der ersten Mischkammerz und Mischen der mindestens einen Verarbeitungschemikalie mit der Vorkautschukmischung mit dem mindestens einen Öl oder dem mindestens einen Flüssig-Polymer, wobei die mindestens eine Verarbeitungschemikalie ausgesucht ist aus der Gruppe bestehend aus Zinkoxid, Stearinsäure, Wachse, und
    - Hinzufügen von mindestens einem Ruß zur ersten Mischkammer und Vermischen mit der Kautschukgrundmischung, wobei der mindestens eine Ruß in dem Mengen 2 bis 10 phr Ruß hinzugefügt wird,

- der Schritt B) mit dem Hinzufügen des Öls oder des mindestens einen Flüssig-Polymers beginnt und mit dem Hinzufügen der Kautschukgrundmischung zur zweiten Mischkammer endet, wobei zumindest teilweise während Schritt B) eine Temperatur in der ersten Mischkammer im Bereich von 160 °C bis 180 °C vorliegt,
- der Schritt D) mit dem Hinzufügen der Kautschukgrundmischung zur zweiten Mischkammer beginnt und mit dem Auswerfen der Kautschukfertigmischung aus der zweiten Mischkammer endet, wobei zumindest teilweise während Schritt D) eine Temperatur in der zweiten Mischkammer im Bereich von 100 °C bis 125 °C vorliegt,
- der Füllfaktor $F_{Füll}$ in Schritt A) und/oder Schritt B) im Bereich von 78 % bis 95 %.liegt, bevorzugt im Bereich von Bereich von 80 % bis 90 % und der Füllfaktors wie folgt definiert ist: $F_{Füll} = V_{VK} / V_{net}$,

wobei

$V_{VK}$ = Volumen der in Schritt A) hergestellten zumindest teilweise silanisierten Vorkautschukmischung und

$V_{net}$ = Volumen der ersten Mischkammer abzüglich des Volumens des Rotors in der ersten Mischkammer,

- die Fertigmischung eine Viskosität bei 100 °C im Bereich von 10 bis 30 MU (ML 1+3) aufweist und

- der Schritt C) zumindest teilweise gleichzeitig mit den Schritten A) und B) durchgeführt wird.

Die vorstehend beschriebenen vorteilhaften Aspekte eines erfindungsgemäßen Verfahrens zur Herstellung einer Kautschukfertigmischung gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens zur Herstellung einer Kautschukfertigmischung.

Die Erfindung betrifft auch eine Vorrichtung zur Durchführung des Verfahrens wie vorstehend beschrieben oder wie vorstehend als bevorzugt beschrieben, wobei die Vorrichtung bevorzugt eine Mischvorrichtung wie vorstehend beschrieben oder wie vorstehend als bevorzugt beschrieben ist oder umfasst und ganz besonders bevorzugt ein Tandemmischer ist. Im Rahmen der vorliegenden Erfindung ist ein Tandemmischer bevorzugt eine Vorrichtung zum Herstellen von Kautschukfertigmischungen, umfassend zwei übereinander angeordnete Mischkammer. Bevorzugt ist dabei ein Tandemmischer, bei dem vorgesehen ist, dass eine aus der ersten Mischkammer fallende Kautschukmischung direkt in die zweite Mischkammer fällt.

Die Verwendung eines Tandemmischers hat den Vorteil, dass die Temperatur in der unteren, zweiten Mischkammer zum Vormischen einer weiteren Kautschukmischung und Vulkanisationschemikalien genutzt werden kann und somit mit der später in Schritt D) hinzukommenden Kautschukgrundmischung besser vermischt werden kann. Diese homogenere Vermischung der weiteren Kautschukmischung mit der Kautschukgrundmischung trägt zu einer Verbesserung der chemischen und physikalischen Eigenschaften der finalen Kautschukmischung und insbesondere des finalen Vulkanisats bei. Dies liegt daran, dass die erste Mischung vorteilhafterweise schnell und problemlos von der ersten, oberen Mischkammer in die untere, zweite Mischkammer fällt. Bei nach einander geschalteten Innenmischern mit je einer Mischkammer würde die Kautschukmischung beim Transport zwischen den Mischkammern zu schnell abkühlen.

Bevorzugt ist eine Vorrichtung wie vorstehend beschrieben oder wie vorstehend als bevorzugt beschrieben, wobei die erste Mischkammer

- einen zum Öffnen und Schließen der ersten Auswurföffnung verstellbar ausgebildeten Sattel aufweist und/oder
- einen Stempel zum Schließen der Einfüllöffnung der ersten Mischkammer umfasst.

Der vorstehend beschrieben Aspekt der vorliegenden Erfindung beschreibt, dass der vorstehend beschriebene Füllfaktor erreicht werden kann.

Bevorzugt ist eine Vorrichtung wie vorstehend beschrieben oder wie vorstehend als bevorzugt beschrieben, wobei die Auswurföffnung der ersten Mischkammer mit der Einfüllöffnung der zweiten Mischkammer durch einen Zwischenschacht räumlich verbunden ist. Bevorzugt kann der Zwischenschacht mit Heizelementen erhitzt werden, um die Temperatur aus der ersten Mischkammer kommende Kautschukgrundmischung zu halten oder zu verringern, da so eine vorzeitige Vulkanisation besser vermieden werden kann. Dies führt zu besseren chemischen Eigenschaften der finalen Kautschukfertigmischung und besseren physikalischen Eigenschaften des finalen Vulkanisats.

Bevorzugt ist eine Vorrichtung wie vorstehend beschrieben oder wie vorstehend als bevorzugt beschrieben, wobei in der ersten und/oder zweiten Mischkammer ein oder zwei Mischrotoren zu Mischen einer Kautschukmischung angeordnet sind, wobei die Mischrotoren von einer Steuereinheit angesteuert werden, wobei die Steuereinheit dazu eingerichtet ist, die einzelnen Rotoren der ersten Mischkammer unabhängig von den Rotoren der zweiten Mischkammer zu steuern.

Der vorstehend beschrieben Aspekt der vorliegenden Erfindung beschreibt, dass ein gleichzeitigtes Mischen wie vorstehend beschrieben in der ersten und zweiten Mischkammer möglich ist und somit der Produktionsdurchsatz erhöht wird.

Weiterhin betrifft die Erfindung eine Vorrichtung wie vorstehend beschrieben oder wie vorstehend als bevorzugt beschrieben, wobei die Vorrichtung eine Zuführeinheit zum Zuführen von Kautschukmischungen oder Kautschukmischungsbestandteilen in die zweite Mischkammer umfasst. Erfindungsgemäß kann die Zuführeinheit mit Heizelementen erhitzt werden, um die zugeführten Kautschukmischungen oder Kautschukmischungsbestandteilen vorzuwärmen. Dies führt zu besseren chemischen und physikalischen Eigenschaften der finalen Kautschukfertigmischung oder des finalen Vulkanisats.

Der vorstehend beschrieben Aspekt der vorliegenden Erfindung beschreibt, dass die zweite Mischkammer gefüttert werden kann, während die erste Mischkammer in Betrieb ist. Somit wird der Produktionsdurchsatz erhöht.

Bevorzugt ist eine Vorrichtung wie vorstehend beschrieben oder wie vorstehend als bevorzugt beschrieben, wobei die Vorrichtung Heizelemente zum Temperieren des ersten und zweiten Kammergehäuses und eine Steuereinheit umfasst, wobei die Steuereinheit dazu eingerichtet ist, die Temperatur der Heizelemente für die erste Mischkammer und die Temperatur der Heizelemente für die zweite Mischkammer unabhängig voneinander zu regeln oder zu steuern

Der vorstehend beschrieben Aspekt der vorliegenden Erfindung beschreibt, dass ein besseres Temperieren wie vorstehend beschrieben in der ersten und zweiten Mischkammer möglich ist und somit der Produktionsdurchsatz erhöht wird.

Die vorstehend beschriebenen vorteilhaften Aspekte eines erfindungsgemäßen Verfahrens zur Herstellung einer Kautschukfertigmischung und einer erfindungsgemäßen Vorrichtung gelten auch für sämtliche Aspekte eines nachstehend beschriebenen Verfahren zur Herstellung eines Vulkanisats und die nachstehend diskutierten vorteilhaften Aspekte erfindungsgemäßer Verfahren zur Herstellung eines Vulkanisats gelten entsprechend für sämtliche Aspekte eines erfindungsgemäßen Verfahrens zur Herstellung einer Kautschukfertigmischung und einer erfindungsgemäßen Vorrichtung.

Die Erfindung betrifft auch ein Verfahren zur Herstellung eines Vulkanisats, wobei zur Herstellung der Kautschukfertigmischung eine erfindungsgemäße Vorrichtung verwendet wird oder eine Mischvorrichtung umfassend:

- eine erste Mischkammer, wobei die erste Mischkammer von einem ersten Kammergehäuse, einer ersten Einfüllöffnung und einer ersten Auswurföffnung begrenzt wird, und
- eine unterhalb der ersten Mischkammer angeordnete zweite Mischkammer, wobei die zweite Mischkammer von einem zweiten Kammergehäuse, mindestens einer zweiten Einfüllöffnung und einer zweiten Auswurföffnung begrenzt wird,

wobei das Verfahren die folgenden Schritte umfasst:

A) Mischen von mindestens einem Kautschuk, mindestens einem Silanisierungsmittel und Silika in der ersten Mischkammer der Mischvorrichtung, sodass eine zumindest teilweise silanisierte Vorkautschukmischung entsteht,

B) Hinzufügen von mindestens einem Öl oder mindestens einem Flüssig-Polymer zur zumindest teilweise silanisierten Vorkautschukmischung und Mischen des mindestens einem Öls oder mindestens einem Flüssig-Polymers mit der zumindest teilweise silanisierten Vorkautschukmischung in der ersten Mischkammer, sodass eine Kautschukgrundmischung entsteht,

C) Mischen von einer oder mehrerer Vulkanisationschemikalien und mindestens einem weiteren Kautschuk in der zweiten Mischkammer der Mischvorrichtung, sodass eine Vorvulkanisationsmischung entsteht,

D) Hinzufügen der in Schritt B) hergestellten Kautschukgrundmischung zur in Schritt C) hergestellten Vorvulkanisationsmischung in die zweite Mischkammer und Mischen der Vorvulkanisationsmischung mit der Kautschukgrundmischung, sodass eine Kautschukfertigmischung entsteht, und

E) Weiterverarbeiten der Kautschukfertigmischung zu einem Reifenbauteil eines Rohlings und anschließendes Vulkanisieren des Reifenbauteils des Rohlings zu einem Vulkanisat, bevorzugt zu einem Vulkanisat in einem Fahrzeugreifen.

Besonders bevorzugt wird das erfindungsgemäße Verfahren verwendet, um ein Reifenbauteil eines Fahrzeugreifens oder eines Fahrzeugluftreifens herzustellen, ganz besonders bevorzugt um einen Laufstreifenabschnitt wie Cap, Base oder Schulter, eine Seitenwand oder einen Reifenwulstabschnitt herzustellen.

Ganz besonders bevorzugt wird das erfindungsgemäße Verfahren verwendet, um einen Laufstreifen, insbesondere eine Cap, eines Fahrzeugreifens oder eines Fahrzeugluftreifens herzustellen, da ein sicheres Fahrverhalten des so hergestellten Laufstreifens erreicht werden kann. Dies wird experimentell durch einen besseren Messwert bei "tan d (0 °C)" oder bei "tan d (20 °C)" erreicht, welcher ein Indikator für das Bremsen auf gerader Strecke ist. Auch zeigen die Experimente, dass der Rollwiderstand mit einem vorstehend beschriebenen Laufstreifen besser ist, siehe Messwert "tan d (55°C)".

Die Cap des Fahrzeugreifens oder des Fahrzeugluftreifens ist dabei bevorzugt die Cap eines Winter-Fahrzeugreifens oder die Cap eines Winter-Fahrzeugluftreifens, da ein sicheres Fahrverhalten der so hergestellten Cap erreicht werden kann. Dies wird experimentell durch einen besseren Messwert "tan d (-15°C)" erreicht, welcher ein Indikator für die Schneeperformance ist.

**Experimentelle Beispiele:**

Messmethoden:

1. Mooney-Viskosität

Die Ergebnisse wurden bei 100 °C in Anlehnung an die Methode DIN 53504 ermittelt.

2. Verlustfaktor tan δ (10%) und dynamischer Speichermodul (G'(1%), G'(100%)) aus RPA (= *engl.* "rubber process analyzer")

Die Ergebnisse wurden in Anlehnung an ASTM D6601 vom zweiten Dehnungsdurchlauf bei 1 Hz und 70°C;

3. Rubber bound

Es wurden jeweils 1 g der jeweiligen Kautschukfertigmischung genommen und in ca. 1 mm$^3$ großen Kautschuk-würfeln in zwei Soxhlet-Destillationsanlagen (jeweilige Größe: 100 mL) getan. Die erste Soxhlet-Destillationsanlage wurde mit Aceton für 16 Stunden extrahiert und die zweite Soxhlet-Destillationsanlage wurde für 40 Std. mit Cyclohexan extrahiert. Die jeweiligen extrahierten Proben wurden anschließend im Trockenschrank für 4 Stunden bei 70°C getrocknet. Für beide Proben wird jeweils sowohl der Gewichtsanteil an verbranntem organischem Anteil ($OA_{Cyc}$ und $OA_{Ace}$) als auch als auch der Gewichtsanteil an der im Tiegel verbleibenden Masse an Ruß- und Asche ($FA_{Cyc}$ und $FA_{Ace}$) mittels TGA bestimmt. Das Umgebungsgas bei der TGA-Messung war Sauerstoff. Der Wert BR für den Rubber Bound wurde dann über die folgende Formel ermittelt:

$$BR = \frac{OA_{Cyc} \cdot FA_{Ace} \cdot 100}{OA_{Ace} \cdot FA_{Cyc}}.$$

4. Steifigkeitsabfall Delta G', dem Fachmann als Payne-Effekt bekannt

Die Ergebnisse wurden bei 55°C aus dynamisch-mechanischer Messung gemäß DIN 53 513 ermittelt. Der angegebener Wert G' wurde bei 1 % minus G' bei 100 % Dehnung ermittelt.

5. Rückprallelastizität

Die Ergebnisse wurden bei Raumtemperatur und 70°C gemäß DIN 53 512 ermittelt.

6. Zugfestigkeit

Die Ergebnisse wurden bei Raumtemperatur gemäß DIN 53 504 ermittelt.

7. Bruchdehnung

Die Ergebnisse wurden bei Raumtemperatur gemäß DIN 53504 ermittelt.

8. Bruchenergiedichte

Die Ergebnisse wurden im Zugversuch bei Raumtemperatur gemäß DIN 53 504 ermittelt, wobei die Bruchenergiedichte, die bis zum Bruch erforderliche Arbeit, bezogen auf das Volumen der Probe, ist.

9. Dynamischer Speichermodul E'

Die Ergebnisse wurden bei 100°C gemäß DIN 53 513 bei 0,15% und 8% Dehnung ermittelt.

10.Verlustfaktor tan d

Die Ergebnisse wurden bei -15 °C 0 °C, 20 °C und 55 °C aus dynamisch-mechanischer Messung gemäß DIN 53513 ermittelt, wobei der Temperaturdurchlauf ("temperature sweep") von 50/30 N mit einer statischen Anfangskraft 30 N und einer dynamischen Oszillation zwischen 30 und 50 N war.

Herstellung:

Die nicht-erfindungsgemäße Herstellung erfolgte für die Referenzmischung R1 in zwei nacheinander geschalteten Innenmischern mit je einer Mischkammer (Bezeichnung der Mischkammer des ersten Innenmischers ist "M1K1" und Bezeichnung der Mischkammer des zweiten Innenmischers ist "M2K1") und die erfindungsgemäße Herstellung erfolgte für die Mischungen A1, A18 und A189 jeweils in einem Tandemmischer mit zwei übereinander angeordneten Mischkammern, wobei die obere Mischkammer die erste Mischkammer mit der Bezeichnung "T1K1" und die untere Mischkammer die zweite Mischkammer mit der Bezeichnung "T1K2" ist.

Tabelle 1: Experimentelle Daten der erfindungsgemäß und nicht erfindungsgemäß herestellten Kautschukmischunen:

| Bestandteil | Einhei t | Zugabe in Mischkammer | Mengen der Mischung |
|---|---|---|---|
| | | | |
| NR | phr | 1 | 20 |
| BR | phr | 1 | 30 |
| SSBR | phr | 1 | 50 |
| Organosilan*** | phr | 1 | 6 |
| Ruß | phr | 1 | 30 |
| Silika | phr | 1 | 80 |
| Zusatzstoffe* | phr | 1 | 15 |
| Öl | phr | 1 | 75 |
| Vulkanisations -chemikalien** | phr | 2 | 7 |
| *Zusatzstoffe: Ozonschutzwachs, Alterungsschutzmittel, ZnO, Stearinsäure **Vulkanisationschemikalien: Schwefel und Vulkanisationsbeschleuniger CBS *** TESPD (3,3'-Bis(triethoxysilylpropyl)disulfide mit 2 Schwefelatomen) | | | |

Die in Tabelle 1 beschriebenen Kautschukmischungsbestandteile wurden in den in Tabelle 2 dargelegten ersten und zweiten Mischkammern zweier Innenmischer (für Mischung R) oder eines Tandemmischers (für die Mischungen A1, A18 und A189) hinzugefügt. Bei den zwei nacheinander geschalteten Innenmischern bei der Herstellung von Referenzmischung R1 wurde die Kautschukgrundmischung von dem ersten Innenmischer über ein übliches Förderband in den zweiten Innenmischer transportiert. Die einzelnen Verfahrensschritte umfassen je nach Mischung (R1, A1, A18 und A189) wie in Tabelle 2 gezeigt entweder die Schritte A, B, und D oder die Schritt A, B, C und D oder die Schritt A, B, B-C, C und D eines erfindungsgemäßen Verfahrens.

Tabelle 2: Unterschiedliche Herstellungsparameter zur Herstellung einer Kautschukfertigmischung aus den in Tabelle 1 angegebenen Kautschukmischungen:

| Mischung: | R | A1 | A18 | A189 |
|---|---|---|---|---|
| | Referenz | Erfind.-gem. | Erf.-ge. | Erf.-ge. |
| Verwendete Mischer: | 2 Innenmisch er | Tandem-mis cher | Tandem-mis cher | Tandem-mis cher |
| Verfahrensschritte: | | | | |
| Schritt A), erste Mischstufe: Vermischen der Kautschuke, des Silikas und des Organosilans | M1K1 (100 °C) | T1K1 (100 °C) | T1K1 (100 °C) | T1K1 (100 °C) |
| Schritt B), zweite Mischstufe: Hinzufügen des Öls | M1K1 (100°C) | T1K1 (100°C) | T1K1 (100°C) | T1K1 (100°C) |
| Schritt B-C), dritte Mischstu.: Hinzufügen des Rußes und der Zusatzstoffe | Nicht durchgeführ t, Zugabe mit Öl in Schritt B) (100 °C) | Nicht durchgeführt, Zugabe mit Öl in Schritt B) (100 °C) | T1K1 (165°C) | T1K1 (175°C) |
| Schritt C), vierte Mischstufe: Vormischen der Vulkanisationschemi kalien mit einer weiteren Kautschukmischung | Kein Vorvermisc hen, Zugabe erst in Schritt D) | T1K2 (80 °C) | T1K2 (80 °C) | T1K2 (80 °C) |

(fortgesetzt)

| Mischung: | R | A1 | A18 | A189 |
|---|---|---|---|---|
| | Referenz | Erfind.-gem. | Erf.-ge. | Erf.-ge. |
| **Verwendete Mischer:** | 2 Innenmisch er | Tandem-mis cher | Tandem-mis cher | Tandem-mis cher |
| **Verfahrensschritte:** | | | | |
| Schritt D), fünfte Mischstufe: Mischen der Kautschuk-grundmis chung und der in Schritt C) vorgemischten Vulkanisations-chemi kalien | M2K1 (110°C) | T1K2 (110°C) | T1K2 (110°C) | T1K2 (110°C) |
| Füllfaktor in der ersten Mischkammer (M1K1 oder T1K1 während Schritt B) | 100 % | 130% | 130% | 130% |

Die Herstellung der erfindungsgemäß vermischten Kautschukmischung erfolgt nach dem in Tabelle 2 beschriebenen Verfahren, wobei für das Mischverfahren für die Mischung R1 in zwei nacheinander geschaltete Innenmischer (Abkürzung: M1 und M2) mit je einer Mischkammer und für die Mischungen A1, A18 und A189 ein Tandemmischer verwendet wurde.

Hierbei steht die Abkürzung "M1K1" für die Mischkammer des ersten Innenmischers M1 und die Abkürzung "M2M1" für die Mischkammer des zweiten Innenmischer M2.

Hierbei steht die Abkürzung "T1K1" für die erste Mischkammer des Tandemmischers und die Abkürzung "T1M2" für die zweite, untere Mischkammer des Tandemmischers.

Bei den verschiedenen Verfahren wird zunächst in einer Mischstufe (für Mischung R1), in zwei Mischstufen (für Mischung A1) oder in drei Mischstufen (für die Mischung A18 und A189) eine Kautschukgrundmischung mit allen Bestandteilen außer dem Vulkanisationssystem (Schwefel und vulkanisationsbeeinflussende Substanzen) hergestellt. Durch Zugabe des Vulkanisationssystems in die zweite Mischkammer während der vierten Mischstufe und der Zugabe der Kautschukgrundmischung zum vorgemischten oder nicht vorgemischten Vulkanisationssystem wird die jeweilige Kautschukfertigmischung (d.h. Mischungen R1, A1, A18, A189) erzeugt. Die jeweils in den Mischkammern mit den Mischkammerbezeichnungen "M1K1", "M2K1", "T1M1" oder "T1K2" vorliegenden Temperaturen sind in Tabelle 2 jeweils in Klammern hinter den Mischkammerbezeichnungen angezeigt. Die in Schritt C) hinzugefügte, weitere Kautschukmischung ist eine Kautschukmischung, welche auf die gleiche Weise und mit den gleichen Bestandteilen wie die Referenzmischung R im Vorfeld hergestellt wurde.

Die so resultierende Kautschukfertigmischung wird z.B. durch einen Extrusionsvorgang oder Kalandrieren weiterverarbeitet und in die entsprechende Form gebracht.

Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet. Die Vulkanisationszeit der Probekörper für die Messung der nachstehend beschriebenen chemischen und physikalischen Eigenschaften war 20 Minuten bei 160 °C.

Ergebnisse:

Tabelle 3: Experimentelle Daten der chemischen Eigenschaften erfindungsgemäß (Mischungen A1, A18 und A189) und nicht-erfindungsgemäß hergestellter Kautschukfertigmischungen (Mischung R1) und deren Vulkanisate

| Mischung | | R1 | A1 | A18 | A189 |
|---|---|---|---|---|---|
| | | Referenz | Erfi.-gemäß | Erfi.-gemäß | Erfi.-gemäß |
| **Chemische Eigenschaften** | | | | | |
| Mooney (ML1+3) | MU | 36 | 35 | 36 | 43 |
| Mooney (ML1+4) | MU | 34 | 34 | 35 | 41 |
| G' (1%) | kPa | --- | 1203 | 1054 | 1102 |
| G' (100%) | kPa | --- | 503 | 456 | 480 |

(fortgesetzt)

| Mischung | | R1 | A1 | A18 | A189 |
|---|---|---|---|---|---|
| | | Referenz | Erfi.-gemäß | Erfi.-gemäß | Erfi.-gemäß |
| **Chemische Eigenschaften** | | | | | |
| tan d (10%) | - | --- | 0,148 | 0,145 | 0,135 |
| Bound Rubber BR | % | --- | 50,5 | 57,4 | 63,1 |
| Rückprallelast. RT | % | 39,7 | 39,3 | 41,1 | 42,1 |
| Rückprallela. 70°C | % | 47,8 | 47,8 | 48,8 | 50 |

Aus den Messergebnissen aus Tab. 3 kann geschlossen werden, dass die erfindungsgemäß hergestellten Kautschukmischungen A18 und A189 vorteilhaftere Eigenschaften aufweisen als die Kautschukmischung A1. Dies gilt insbesondere für die Werte der Rückprallelastizität, des Steifigkeitsabfalls G'(1%) - G'(100%) und des "Bound Rubber".

Die Kautschukmischung A189 weist zudem stark verbesserte Werte bei der Mooney-Viskosität und den Werte für den tan d (10%) gegenüber den anderen Kautschukmischungen auf.

Insbesondere zweigt die Mischung A189 höhere Mooney-Viskositäten und hat daher die vorstehend beschriebenen Vorteile bei der Präzision der Form des Extrudats und Lagerung des Extrudats.

Tabelle 4: Experimentelle Daten der physikalischen Eigenschaften erfindungsgemäß (A1, A18 und A189) und nichterfindungsgemäß hergestellter Vulkanisate (R1)

| Verwendete Mischung | | R1 | A1 | A18 | A189 |
|---|---|---|---|---|---|
| | | Referenz | Erfi.-gemäß | Erfi.-gemäß | Erfi.-gemäß |
| **Physikalische Eigenschaften** | | | | | |
| Zugfestigkeit | MPa | 10,6 | 12,5 | 13,6 | 13,9 |
| Bruchdehnung | % | 467 | 529 | 582 | 550 |
| Bruchenergiedicht e | J/cm$^3$ | 17,7 | 24,5 | 28,9 | 27,7 |
| E' (0.15%) | MPa | - | 18,2 | 15,6 | 15,6 |
| E' (8%) | MPa | - | 5,4 | 5 | 5,1 |
| **Verlustfaktoren:** | | | | | |
| tan d (-15°C) | - | - | 0,276 | 0,271 | 0,271 |
| tan d (0°C) | - | - | 0,225 | 0,212 | 0,209 |
| tan d (20 °C) | - | - | 0,183 | 0,17 | 0,166 |
| tan d (55°C) | - | - | 0,125 | 0,118 | 0,111 |

Aus den Messergebnissen aus Tab. 4 kann geschlossen werden, dass die erfindungsgemäß hergestellten Vulkanisate vorteilhaftere Eigenschaften aufweisen als die mit Referenzmischung R1 hergestellten Vulkanisate. Insbesondere die Zugfestigkeit und Bruchdehnung sowie die Bruchenergiedichte konnten mittels der Herstellung eines erfindungsgemäßen Verfahrens verbessert werden, da durch das vor Mischen der Vulkanisationschemikalien mit einer weiteren Kautschukmischung in Schritt C) eines erfindungsmäßen Verfahrens die Vulkanisation aufgrund einer homogeneren Vermischung verbessert werden kann. Durch eine separate Zugabe des Rußes und der Zusatzstoffe in einer dritten Mischstufe, d.h. Schritt B-C), konnten zudem die Zugfestigkeit, die Bruchdehnung und die Bruchenergiedichte sowie die dynamische Steifigkeit E' weiter gegenüber der Referenzmischung R1 und der Mischung A1 verbessert werden. Eine weitere Verbesserung der physikalischen Eigenschaften durch die besagte separate Zugabe des Rußes und der Zusatzstoffe kann durch die vorteilhafteren Werte beim Verlustfaktor erkannt werden. Noch vorteilhaftere Werte beim Verlustfaktor können nur erreicht werden, indem die Temperatur in der dritten Mischstufe, d.h. Schritt B-C), erhöht wird.

Die vorstehend beschriebenen vorteilhaften physikalischen Eigenschaften von erfindungsgemäß hergestellten Vulkanisaten resultieren insbesondere aus den in Tab. 3 gezeigten Messwerten der chemischen Eigenschaften der erfindungsgemäß hergestellten Kautschukmischungen. Insbesondere die "tan d"-Werte, d.h. die Verlustfaktor-Werte, in Tabelle 4 zeigen, dass dabei die vorteilhaften physikalischen Eigenschaften eines Reifens mit einer erfindungsgemäß hergestellten Kautschukmischung erzielt werden. Die Messwerte bei "tan d (0 °C)" oder bei "tan d (20 °C)" sind Indikatoren für das Bremsen auf gerader Strecke. Auch zeigen die Messwert "tan d (55°C)" einen besseren Rollwiderstand an. Die besseren Messwerte für "tan d (-15°C)" sind ein Indikator für eine besseres Fahrverhalten auf schneebedeckter Straße.


**Patentansprüche**

1. Verfahren zur Herstellung einer Kautschukfertigmischung, wobei zur Herstellung der Kautschukfertigmischung eine Mischvorrichtung verwendet wird, welche aufweist:

    - eine erste Mischkammer, wobei die erste Mischkammer von einem ersten Kammergehäuse, einer ersten Einfüllöffnung und einer ersten Auswurföffnung begrenzt wird, und
    - eine unterhalb der ersten Mischkammer angeordnete zweite Mischkammer, wobei die zweite Mischkammer von einem zweiten Kammergehäuse, mindestens einer zweiten Einfüllöffnung und einer zweiten Auswurföffnung begrenzt wird,

    wobei das Verfahren die folgenden Schritte umfasst:

    A) Mischen von mindestens einem Kautschuk, mindestens einem Silanisierungsmittel und Silika in der ersten Mischkammer der Mischvorrichtung, sodass eine zumindest teilweise silanisierte Vorkautschukmischung entsteht, wobei zusätzlich zum Silanisierungsmittel ein Silanisierungsbeschleuniger hinzugefügt und vermischt wird,
    B) Hinzufügen von mindestens einem Öl oder mindestens einem Flüssig-Polymer zur zumindest teilweise silanisierten Vorkautschukmischung und Mischen des mindestens einen Öls oder mindestens einen Flüssig-Polymers mit der zumindest teilweise silanisierten Vorkautschukmischung in der ersten Mischkammer, sodass eine Kautschukgrundmischung entsteht,
    C) Mischen von einer oder mehrerer Vulkanisationschemikalien und mindestens einem weiteren Kautschuk in der zweiten Mischkammer der Mischvorrichtung, sodass eine Vorvulkanisationsmischung entsteht, wobei die Vulkanisationschemikalien und der mindestens eine weitere Kautschuk mittels einer Zuführeinheit mit Heizelementen vorgewärmt und in die zweite Mischkammer zugeführt werden,
    D) Hinzufügen der in Schritt B) hergestellten Kautschukgrundmischung zur in Schritt C) hergestellten Vorvulkanisationsmischung in die zweite Mischkammer und Mischen der Vorvulkanisationsmischung mit der Kautschukgrundmischung, sodass eine Kautschukfertigmischung entsteht.

2. Verfahren nach Anspruch 1, wobei ein oder jeder Kautschuk des in Schritt A) gemischten mindestens einen Kautschuks ausgesucht ist aus der Gruppe bestehend aus synthetischem Polyisopren (IR) und natürlichem Polyisopren (NR) und Styrol-Butadien-Kautschuk (SBR) und Polybutadien (BR), wobei der mindestens eine Kautschuk in Schritt A) bevorzugt die drei Kautschuke natürliches Polyisopren (NR) und Styrol-Butadien-Kautschuk (SBR) und Polybutadien (BR) umfasst.

3. Verfahren nach einem der vorangehenden Ansprüche, wobei ein oder jedes Silanisierungsmittel des in Schritt A) hinzugefügten mindestens einen Silanisierungsmittels ein Organosilan ist.

4. Verfahren nach einem der vorangehenden Ansprüche, wobei ein oder jedes Öl des in Schritt B) hinzugefügten mindestens einen Öls ausgesucht ist aus der Gruppe bestehend aus Mineralöl und Rapsöl.

5. Verfahren nach einem der vorangehenden Ansprüche, wobei das Verfahren zusätzlich den Schritt B-C) umfasst und der Schritt B-C) wie folgt lautet:

    Hinzufügen von mindestens einer Verarbeitungschemikalie zu der ersten Mischkammer und Mischen der mindestens einen Verarbeitungschemikalie mit der Vorkautschukmischung mit dem mindestens einen Öl oder dem mindestens einen Flüssig-Polymer,
    und/oder
    Hinzufügen von mindestens einem Ruß zur ersten Mischkammer und Vermischung zur Kautschukgrundmischung, wobei der mindestens eine Ruß in den Mengen 1 bis 80 phr Ruß hinzugefügt wird, bevorzugt in den Mengen 1 bis 40 phr Ruß, besonders bevorzugt in den Mengen 2 bis 10 phr Ruß.

6. Verfahren nach einem der vorangehenden Ansprüche, wobei der Füllfaktor $F_{Füll}$ in Schritt A) und/oder Schritt B) im Bereich von 78 % bis 95 % liegt, bevorzugt im Bereich von Bereich von 80 % bis 90 %.

7. Verfahren nach einem der vorangehenden Ansprüche, wobei die Kautschukfertigmischung eine Mooney-Viskosität (ML 1+3) bei 100 °C von größer als 20 MU aufweist, bevorzugt eine Mooney-Viskosität im Bereich von 20 bis 60 MU, besonders bevorzugt eine Mooney-Viskosität im Bereich von 25 bis 40 bis MU.

8. Verfahren nach einem der vorangehenden Ansprüche, wobei der Schritt C) zumindest teilweise gleichzeitig mit den Schritten A) und/oder B) durchgeführt wird.

9. Verfahren nach einem der Ansprüche 5 bis 8, wobei zumindest teilweise während des Schrittes B-C) eine Temperatur in der ersten Mischkammer im Bereich von 120 °C bis 190 °C vorliegt, bevorzugt im Bereich von 150 °C bis 190 °C, besonders bevorzugt im Bereich von 160 °C bis 180 °C, ganz besonders bevorzugt im Bereich von 170 °C bis 180 °C.

10. Vorrichtung zur Durchführung des Verfahrens nach einem der vorangehenden Ansprüche, wobei die Vorrichtung eine Mischvorrichtung wie in Anspruch 1 definiert ist oder umfasst, mit

- einer ersten Mischkammer, wobei die erste Mischkammer von einem ersten Kammergehäuse, einer ersten Einfüllöffnung und einer ersten Auswurföffnung begrenzt wird, und
- einer unterhalb der ersten Mischkammer angeordneten zweite Mischkammer, wobei die zweite Mischkammer von einem zweiten Kammergehäuse, mindestens einer zweiten Einfüllöffnung und einer zweiten Auswurföffnung begrenzt wird,
wobei die erste Mischkammer einen zum Öffnen und Schließen der ersten Auswurföffnung verstellbar ausgebildeten Sattel aufweist,
wobei die Vorrichtung mindestens eine Zuführeinheit zum Zuführen von einer oder mehrerer Vulkanisationschemikalien und Kautschukmischungen oder Kautschukmischungsbestandteilen in die zweite Mischkammer umfasst, **dadurch gekennzeichnet, dass**
die Zuführeinheit mit Heizelementen erhitzt werden, um die zugeführten Vulkanisationschemikalien und Kautschukmischungen oder Kautschukmischungsbestandteilen vorzuwärmen.

11. Vorrichtung nach Anspruch 10, wobei die erste Mischkammer

- einen Stempel zum Schließen der Einfüllöffnung der ersten Mischkammer umfasst.

12. Vorrichtung nach einem der vorangehenden Ansprüche 10 bis 11, wobei die Auswurföffnung der ersten Mischkammer mit der Einfüllöffnung der zweiten Mischkammer durch einen Zwischenschacht verbunden ist.

13. Vorrichtung nach einem der vorangehenden Ansprüche 10 bis 12, wobei in der ersten und/oder zweiten Mischkammer ein oder zwei Mischrotoren zu Mischen einer Kautschukmischung angeordnet sind, wobei die Mischrotoren von einer Steuereinheit angesteuert werden, wobei die Steuereinheit dazu eingerichtet ist, die einzelnen Rotoren der ersten Mischkammer unabhängig von den Rotoren der zweiten Mischkammer zu steuern.

14. Vorrichtung nach einem der vorangehenden Ansprüche 10 bis 13, wobei die Vorrichtung

- Heizelemente zum Temperieren des ersten und zweiten Kammergehäuses und eine Steuereinheit umfasst, wobei die Steuereinheit dazu eingerichtet ist, die Temperatur der Heizelemente für die erste Mischkammer und die Temperatur der Heizelemente für die zweite Mischkammer unabhängig voneinander zu regeln oder zu steuern.

15. Verfahren zur Herstellung eines Vulkanisats, wobei zur Herstellung der Kautschukfertigmischung eine Vorrichtung nach einem der Ansprüche 10 bis 14 verwendet wird, umfassend folgenden Schritt:

- Weiterverarbeiten der Kautschukfertigmischung nach einem der Ansprüche 1 bis 9 zu einem Reifenbauteil eines Rohlings und anschließendes Vulkanisieren des Reifenbauteils des Rohlings zu einem Vulkanisat, bevorzugt zu einem Vulkanisat in einem Fahrzeugreifen.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017208137 A1
- EP 0277558 A2
- DE 4124600 A1
- EP 3181634 A1